# EUROPÄISCHE PATENTSCHRIFT

(11) **EP 1 197 630 B1**
(45) Veröffentlichungstag und Bekanntmachung des Hinweises auf die Patenterteilung: **17.05.2006**
(21) Anmeldenummer: 01810951.2
(22) Anmeldetag: 01.10.2001
(51) Int. Cl.: E21B 10/44, B23B 51/00

(54) **Wendelbohrer für Gestein**
Masonry drill bit
Foret pour maçonnerie

(30) Priorität: 11.10.2000 DE 10050229
(43) Veröffentlichungstag der Anmeldung: 17.04.2002
(73) Patentinhaber: HILTI Aktiengesellschaft, 9494 Schaan (LI)
(72) Erfinder: KLEINE, Werner, 28832 Achim (DE); BONGERS-AMBROSIUS, Hans-Werner, 81477 München (DE)
(74) Vertreter: Wildi, Roland

(56) Entgegenhaltungen:
- EP-A- 0 790 092
- DE-B- 2 358 447

## Beschreibung

Die Erfindung bezeichnet einen zumindest teilweise drehend von einem Handwerkzeuggerät angetriebenen Wendelbohrer, welcher zum vorwiegend abrasiven Abtrag von Gestein oder gesteinsähnlichem Material wie Beton und Mauerwerk ausgelegt ist.

Derartige Wendelbohrer für Gestein weisen längs der Drehachse zwischen dem meist mit Schneiden aus Hartstoff besetzten Werkzeugkopf und dem zur Einführung in das Handwerkzeuggerät ausgeführten Einsteckende einen Werkzeugschaft mit einem Bohrerkerndurchmesser auf, welchen meist mehrere radiale Wendelgänge wendelförmig umlaufen. Der Rücken als radial äussere Fläche der Wendelgänge beschreibt bei der Drehung des Wendelbohrers um seine Drehachse im wesentlichen eine zylindrische Hüllfläche mit dem Bohrlochdurchmesser. Die zwischen dem Bohrerkerndurchmesser, der Hüllfläche und axial benachbarten Wendelgängen ausgebildeten Wendelnuten dienen dem Abtransport des abrasiv abgetragenen Materials.

Der unmittelbar hinter dem Werkzeugkopf angeordnete Bereich des Schaftes ist bedingt durch den zeitlich längeren Kontakt mit der harten Bohrlochwandung einem hohen Verschleiss unterworfen, wodurch der Durchmesser der Hüllfläche in diesem Bereich verringert und somit konisch wird. Im Zusammenhang mit der radialen Abnutzung der Schneiden am Werkzeugkopf bei abgenutzten Wendelbohrern führt dies bei tieferen Bohrungen zu einem Verklemmen des konischen Schaftes an der konischen Bohrlochwandung. Zudem neigen Wendelbohrer mit einem Durchmesser kleiner 15 mm bei tieferen Bohrungen zum Verstopfen durch sich innerhalb der Wendelnuten verdichtendes abgetragenes Material.

Aus der DE19707608A1 ist ein Wendelbohrer zur Herstellung von konischen Bohrungen in weiches Material bekannt, welche für Schraubverbindungen besonders geeignet sind. Dazu weist der Wendelbohrer einen sich bis zu einer Spitze konisch verjüngenden Schaft mit wendelförmigen Wendelnuten auf. Derartige Wendelbohrer sind für hartes Material wie Gestein nicht geeignet.

Nach der US5482124 weist ein Gesteinsbohrer längs der Drehachse unterschiedliche Steigungen der Wendelgänge auf, wobei diese in Richtung des Werkzeugkopfes grösser werden.

Nach der CH476559 weist ein Wendelbohrer für Gestein einen über die Drehachse variablen Bohrerkerndurchmesser auf. Zur Erzielung eines geringeren Gewichts und einer damit verbundenen Erhöhung der Bohrleistung ist im axialen Mittelteil des Schafts der Bohrerkerndurchmesser verjüngt, wohingegen dieser am Übergang zum Einsteckende und zum Werkzeugkopf verstärkt ist, um Schwingungsknoten, welche zur Materialermüdung führen, zu verlegen bzw. besser schädigungsfrei aufnehmen zu können.

Die DE2358447 offenbart einen Wendelbohrer für Gestein mit einem, zwischen einem Einsteckende und einem Werkzeugkopf angeordneten, Schaft mit zumindest einem wendelförmig umlaufenden Wendelgang, wobei eine Breite eines Rückens des Wendelgangs in Richtung des Werkzeugkopfes verstärkt ist.

Die Aufgabe der Erfindung besteht in der Verringerung des Wendelverschleisses bei abgenutzten Wendelbohrern. Ein weiterer Aspekt besteht in der Verminderung von Verstopfungen im Wendelgang.

Die Aufgabe wird im wesentlichen durch die Merkmale des Anspruchs 1 gelöst. Vorteilhafte Weiterbildungen ergeben sich aus den Unteransprüchen.

Im wesentlichen verbreitert sich bei einem Wendelbohrer für Gestein längs der Drehachse die Breite des Rückens des Wendelganges in Richtung des Werkzeugkopfes.

Durch diesen breiteren Rücken des Wendelganges im dem Werkzeugkopf benachbarten Bereich wird dem radialen Verschleiss entgegengewirkt, wodurch sich bezogen auf eine bestimmte zulässige Verringerung der Hüllfläche des Wendelbohrers eine längere Lebensdauer des Wendelbohrer ergibt.

Zur Vermeidung von Dauerwechselbrüchen an den Schwingungsknoten ist der Bohrerkerndurchmesser vorteilhaft in Richtung des Einsteckendes verstärkt ausgebildet. Weiter vorteilhaft variiert der Bohrerkerndurchmesser längs der Drehachse, wobei er in den Bereichen der Schwingungsknoten stärker ausgebildet ist und somit bezüglich einer bestimmten zulässigen Dauerwechselbelastung über die Länge gemittelt schlanker und somit leichter ausgebildet ist.

Vorteilhaft wird die durch den breiteren Rücken des Wendelganges verringerte Querschnittsfläche der Wendelnut durch den sich in Richtung des Werkzeugkopfes verjüngenden Bohrerkerndurchmesser kompensiert.

Vorteilhaft wird die Querschnittsfläche der Wendelnut in Richtung des Einsteckendes durch den schmäleren Rücken des Wendelganges grösser, wodurch der Verstopfungsgefahr entgegengewirkt wird. Weiter vorteilhaft ist zusätzlich die Steigung des Wendelganges längs des Schaftes variiert und insbesondere diese in Richtung des Einsteckendes kleiner, wodurch beim vertikalen Bohren nach unten eine ausreichende Förderung des, kinetische Energie längs des Schaftes verlierenden, abgetragenen Materials erzielt wird.

Die Erfindung wird bezüglich eines vorteilhaften Ausführungsbeispiels näher erläutert mit:

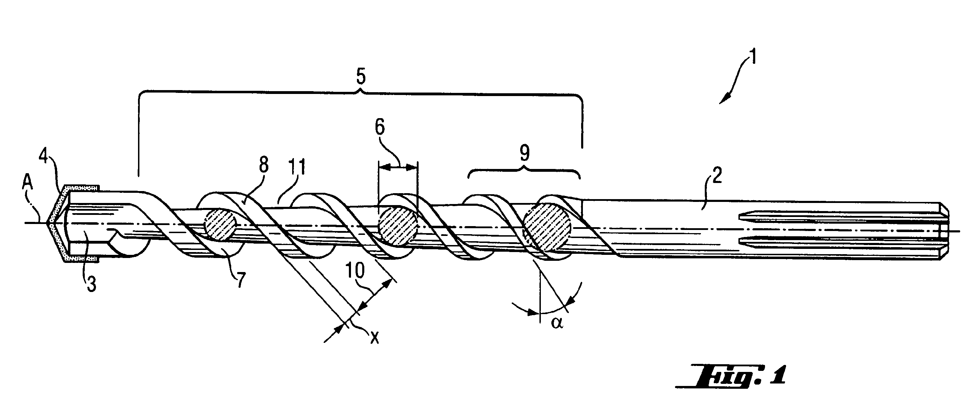

Fig. 1 als Wendelbohrer.

Nach Fig. 1 weist ein Wendelbohrer 1 für Gestein längs einer Drehachse A zwischen einem Einsteckende 2 und einem Werkzeugkopf 3 mit Schneiden 4 aus Hartstoff zwei wendelförmig um einen Schaft 5 mit einem Bohrerkerndurchmesser 6 verlaufende Wendelgänge 7 auf, deren Breite x des Rückens 8 sich in Richtung des Werkzeugkopfes 3 verstärkt. Der Bohrerkerndurchmesser 6 variiert längs der Drehachse A, wobei er im Bereich des Schwingungsknotens 9 in der Mitte der Bohrerlänge stärker ausgebildet ist. Indem durch die Verringerung des Bohrerkerndurchmessers 6 die Tiefe des Wendelganges 7 in dem Anteil zunimmt, wie deren Breite 10 abnimmt, bleibt der Querschnitt einer Wendelnut 11 gleich. Die Steigung α des Wendelganges 7 nimmt längs des Schaftes 5 in Richtung des Einsteckendes 2 ab.

## Patentansprüche

1. Wendelbohrer für Gestein mit einem, zwischen einem Einsteckende (2) und einem Werkzeugkopf (3) angeordneten, Schaft (5) mit zumindest einem wendelförmig umlaufenden Wendelgang (7), wobei eine Breite (x) eines Rückens (8) des Wendelgangs (7) in Richtung des Werkzeugkopfes (3) verstärkt ist **dadurch gekennzeichnet, dass** die Steigung (α) des Wendelganges (7) in Richtung des Einsteckendes (2) abnehmend ist.

2. Wendelbohrer nach Anspruch 1, **dadurch gekennzeichnet, dass** ein Bohrerkerndurchmesser (6) in Richtung des Einsteckendes (2) verstärkt ausgebildet ist.

3. Wendelbohrer nach Anspruch 2, **dadurch gekennzeichnet, dass** eine durch den breiteren Rücken (8) des Wendelganges (7) verringerte Querschnittsfläche einer Wendelnut (11) durch den sich in Richtung des Werkzeugkopfes (3) verjüngenden Bohrerkerndurchmesser (6) kompensiert ist.

4. Wendelbohrer nach Anspruch 3, **dadurch gekennzeichnet, dass** die Querschnittsfläche der Wendelnut (11) in Richtung des Einsteckendes (2) grösser ausgebildet ist.

## Claims

1. Twist drill for masonry, with a shank (5) which is disposed between an insertion end (2) and a tool head (3) and has at least one helical turn (7) running in a helix around it, a body clearance (8) width (x) of the helical turn (7) being reinforced in the direction of the tool head (3),
**characterised in that** the lead (α) of the helical turn (7) diminishes in the direction of the insertion end (2).

2. Twist drill according to claim 1, **characterised in that** an inside diameter (6) of the drill is reinforced in the direction of the insertion end (2).

3. Twist drill according to claim 2, **characterised in that** a cross-sectional surface of a helical flute (11), reduced by the wider body clearance (8) of the helical turn (7), is compensated by the drill's inside diameter (6) tapering in the direction of the tool head (3).

4. Twist drill according to claim 3, **characterised in that** the cross-sectional surface of the helical flute (11) is bigger in the direction of the insertion end (2).

## Revendications

1. Foret hélicoïdal pour roche avec une tige (5) disposée entre une extrémité d'emmanchement (2) et une tête d'outil (3) et pourvue d'au moins un filet hélicoïdal tournant hélicoïdalement (7), la largeur (x) du dos (8) du filet hélicoïdal (7) augmentant en direction de la tête d'outil (3), **caractérisé en ce que** le pas (α) du filet hélicoïdal (7) diminue en direction de l'extrémité d'emmanchement (2).

2. Foret hélicoïdal selon la revendication 1, **caractérisé en ce que** le diamètre de noyau de foret (6) augmente en direction de l'extrémité d'emmanchement 2).

3. Foret hélicoïdal selon la revendication 2, **caractérisé en ce que** la diminution de section transversale de la rainure hélicoïdale (11) due à l'élargissement du dos (8) du filet hélicoïdal (7) est compensée par le rétrécissement du diamètre de noyau de foret (6) en direction de la tête d'outil (3).

4. Foret hélicoïdal selon la revendication 3, **caractérisé en ce que** la section transversale de la rainure hélicoïdale (11) augmente en direction de l'extrémité d'emmanchement (2).
